# EUROPEAN PATENT APPLICATION

(11) **EP 4 521 771 A1**
(43) Date of publication of application: **12.03.2025**
(21) Application number: 23806918.1
(22) Date of filing: 16.05.2023
(51) Int. Cl.: H04Q 11/00

(54) **DATA TRANSMISSION METHOD AND APPARATUS**

(30) Priority: 20.05.2022 CN 202210552313; 10.08.2022 CN 202210957858
(71) Applicant: Huawei Technologies Co., Ltd., Shenzhen, Guangdong 518129 (CN)
(72) Inventor: SUN, Liang, Shenzhen, Guangdong 518129 (CN); SU, Wei, Shenzhen, Guangdong 518129 (CN); VISSERS, Maarten Petrus Joseph, 80992 Munich (DE)
(74) Representative: Maiwald GmbH
(86) International application number: PCT/CN2023/094462
(87) International publication number: WO 2023/221966

(57) **Abstract**

This application provides a data transmission method and an apparatus. The method includes: mapping service data to a data frame, and sending the data frame. The data frame includes K timeslot blocks, and each of the K timeslot blocks includes M bits and N*X bytes. Some or all of the M bits are used to carry N pieces of first indication information, and each of the N pieces of first indication information indicates that objects carried in every X bytes in the N*X bytes include at least one of service data or padding. K, N, and M each are an integer greater than or equal to 1, and X is an integer greater than 1. The frame structure provided in this application can provide low-delay data transmission for a small-bandwidth service.

## Description

This application claims priority to Chinese Patent Application No. 202210552313.2, filed with the China National Intellectual Property Administration on May 20, 2022 and entitled "DATA TRANSMISSION METHOD AND APPARATUS", and claims priority to Chinese Patent Application No. 202210957858.1, filed with the China National Intellectual Property Administration on August 10, 2022 and entitled "DATA TRANSMISSION METHOD AND APPARATUS", which are incorporated herein by reference in their entireties.

### TECHNICAL FIELD

This application relates to the field of optical communication, and more specifically, to a data transmission method and an apparatus.

### BACKGROUND

With development of informatization and cloudification, private line and video services increasingly need to be carried. These customer services are characterized by a small bandwidth and a large quantity, and require simple, quick, and flexible bandwidth adjustment. Optical transport networks (optical transport networks, OTNs) are widely deployed on trunk lines, metro cores, and metro edges, and have natural advantages of high quality, large capacity, and wide coverage. Therefore, adding small-granularity pipes to the OTN networks to provide a finer timeslot granularity and a simpler lossless bandwidth adjustment mechanism has become a current hotspot direction to carry high-quality connections.

### SUMMARY

This application provides a data transmission method and an apparatus, so that a bandwidth can be flexibly defined based on different scenario requirements while a small-bandwidth service data channel is implemented. In addition, by redesigning a data frame, a delay of some overheads is reduced, and statistical precision of overheads is improved.

According to a first aspect, an embodiment of this application provides a data transmission method. The method may be performed by a sending device or a component (such as a chip or a chip system) of the sending device. This is not limited in this application. The method includes: mapping service data to a data frame, and sending the data frame. The data frame includes K timeslot blocks, each of the K timeslot blocks includes M bits and N*X bytes, M1 bits in the M bits are used to carry N pieces of first indication information, and each of the N pieces of first indication information indicates that objects carried in every X bytes in the N*X bytes include at least one of service data or padding. K is an integer greater than or equal to 1, N is an integer greater than or equal to 1, X is an integer greater than 1, M is an integer greater than or equal to N, and M1 is less than M.

It should be noted that, in this embodiment of this application, the timeslot block may also be referred to as a resource unit or a resource block, or may have another name with development of technologies, which is also applicable to this application.

In addition, in this embodiment of this application, the data frame may be an OTN frame or a metro transport network (metro transport network, MTN) frame. Alternatively, with development of OTN technologies and MTN technologies, new types of OTN frames and MTN frames may be defined, which are also applicable to this application.

It should be understood that, there may be the following cases that the first indication information indicates that the objects carried in the X bytes include at least one of service data or padding. The first indication information indicates that all the objects carried in the corresponding X bytes are data. Alternatively, the first indication information indicates that all the objects carried in the corresponding X bytes are padding. The first indication information indicates that the objects carried in the corresponding X bytes are only data and padding. Alternatively, the first indication information indicates that the objects carried in the corresponding X bytes are data, padding, and other information that is not mentioned.

In an implementation, when the first indication information indicates that the objects carried in the corresponding X bytes are only data and padding, second indication information may indicate an amount of service data in the objects carried in the X bytes, or may indicate an amount of padding in the objects carried in the X bytes. Certainly, for some special cases, for example, when an amount of service data and an amount of padding are the same, preset information may alternatively indicate that an amount of service data and an amount of padding that are carried in the X bytes are equal. In this case, it should be understood that "preset" may include "predefined", for example, "defined in a protocol". "Predefined" may be implemented by saving in advance, in a device, corresponding code, a table, or another format that may indicate related information. A specific implementation is not limited in this application.

Based on the foregoing solution, according to the data transmission method provided in this embodiment of this application, based on a timeslot of M bits and N*X bytes, the data frame supports a small-granularity timeslot of X bytes, and supports a low delay and a low jitter of a small-granularity service, so as to provide a better pipe for a client service. In addition, the N pieces of consecutive X-byte first indication information are placed in a centralized manner, so that a value of N can be flexibly selected based on a system requirement, thereby balancing a storage delay caused by the N groups of X bytes and overheads of indicating the N groups of X bytes.

With reference to the first aspect, in some implementations of the first aspect, the first indication information indicates that the objects carried in the X bytes further include second indication information, the second indication information is located in a specific byte in the X bytes, and the second indication information indicates a quantity of bytes that are used to carry the service data and that are in (X-1) bytes other than the specific byte.

It should be noted that, in this embodiment of this application, the specific byte means that the second indication information is a specific location in the X bytes, for example, a first byte in the X bytes, a last byte in the X bytes, or another location. This is not limited in this application. However, it should be understood that, for the N groups of X bytes, a location of the second indication information is the same, that is, a location of the byte occupied by the second indication information in the X bytes is fixed.

Based on the foregoing solution, the second indication information indicates an amount of service data in a service pipeline, so that clock recovery is performed for a service that requires clock recovery based on a quantity of data bytes in a unit time period. In addition, a code table of the second indication information is used to simplify a chip.

With reference to the first aspect, in some implementations of the first aspect, a bit other than a bit occupied by the second indication information in the specific byte is used to correct a transmission error of the second indication information. The second indication information is placed in a centralized manner and correction protection is performed, so that waste of overheads can be avoided.

With reference to the first aspect, in some implementations of the first aspect, every X bytes in the N*X bytes are one timeslot of the data frame.

It should be understood that the N*X bytes include N timeslots.

With reference to the first aspect, in some implementations of the first aspect, Y*N*X bytes in Y adjacent timeslot blocks are one timeslot of the data frame, and Y is an integer greater than or equal to 1. Based on this solution, according to different values of Y, a timeslot granularity of a large bit width of Y*N*X can be implemented, thereby improving a bandwidth capacity.

With reference to the first aspect, in some implementations of the first aspect, Z*N*X bytes in Z equally spaced timeslot blocks are one timeslot of the data frame, and Z is an integer greater than or equal to 1. Based on this solution, there is a hybrid timeslot in a data frame, that is, the timeslot includes Z*N*X bytes or the timeslot includes X bytes, so that a bandwidth can be flexibly defined based on different scenario requirements.

With reference to the first aspect, in some implementations of the first aspect, M2 bits in the M bits are used to detect or correct a transmission error of the N bits, and M2 is less than M.

For example, error detection information may be a cyclic redundancy check (cyclic redundancy check, CRC), and correction information may be error checking and correcting (error checking and correcting).

It should be understood that, for every X bytes, one piece of first indication information needs to be added to indicate objects carried in the X bytes, and separately performing error detection or correction on the first indication information of every X bytes causes excessively high overheads, and wastes a transmission bandwidth. Therefore, the N pieces of consecutive X-byte first indication information are placed and protected in a centralized manner, so that overhead waste can be avoided, and data transmission efficiency and reliability are improved.

With reference to the first aspect, in some implementations of the first aspect, the data frame further includes location indication information, and the location indication information indicates a start location of a timeslot periodicity.

For example, the timeslot periodicity may be an optical channel service data tributary unit group (optical channel service data tributary unit group, OSTUG) or an optical channel data tributary unit group (optical channel data tributary unit group, ODTUG).

With reference to the first aspect, in some implementations of the first aspect, a quantity of bytes of the location indication information is 1 or 2.

With reference to the first aspect, in some implementations of the first aspect, a value of X is one of 8, 16, 24, and 32. It should be understood that, for a small-granularity bandwidth (for example, 10M) of service transmission in X-byte positioning, it needs to be ensured that no excessively large jitter exists in a transmission path of the service. Therefore, to ensure a delay jitter of the quality service in an end-to-end transmission process, and with reference to implementation costs of a chip, a value of X may be 8, 16, 24, or 32.

With reference to the first aspect, in some implementations of the first aspect, a value of M is a multiple of 8. Based on the value of M, the M bits that are obtained after the X-byte control codes are protected in a centralized manner by using the check and error correction information are a multiple of 8 bits, so as to facilitate delay processing by the chip.

For example, a set including values of M, N, and X includes {M=8, N=4, X=16}, {M=8, N=4, X=32}, {M=16, N=10, X=8}, and {M=16, N=10, X=16}.

It should be noted that, when the X bytes are designed in this application, a value may be obtained based on a maximum allowable jitter of service transmission. For example, when the OSU is designed to transmit a 10M-granularity service, it is generally required to ensure that no excessively large jitter exists in a transmission path of the service and that an end-to-end (using 20 sites as an example) transmission delay jitter of a high-quality service should not be greater than 500 µs. The value of X determines the transmission jitter and the transmission delay of the 10M-granularity service. Based on implementation costs of the chip, the value of X may be 8, 16, 24, or 32.

In addition, when values of M and N are designed in this application, overheads and a delay need to be balanced. For example, if 1-bit first indication information is added for every X bytes to indicate at least one of data or padding, separately performing ECC protection on 1-bit first indication information of every X bytes causes excessively high overheads, and wastes a transmission bandwidth. Therefore, 1-bit control codes of N consecutive X bytes are placed in a centralized manner to perform ECC protection, so as to reduce overhead waste. Because the N X-byte control codes are protected in a centralized manner, it means that N X-byte storage delays are introduced during data processing. Therefore, a value of N needs to be balanced between overhead reduction and delay increase. In addition, the N X-byte control codes are protected in a centralized manner that the M bits after the check and error correction information is added need to be a multiple of 8 bits, so as to facilitate delay processing by the chip.

According to a second aspect, the method may be performed by a sending device or a component (such as a chip or a chip system) of the sending device. This is not limited in this application. The method includes: mapping service data to a first data frame, mapping the first data frame to one or more timeslots of a second data frame, and sending the second data frame. A payload area of the first data frame is used to carry the service data, the payload area of the first data frame includes at least one bearer unit, each of the at least one bearer unit corresponds to at least one check overhead, each of the at least one check overhead is used to perform bit interleaved parity on a corresponding bearer unit, and a bit rate of the first data frame is less than 1.25 Gbit/s.

It should be noted that, in embodiments of this application, the bearer unit is represented as at least one area obtained by dividing the first data frame, and may also be referred to as an area (area), an interval, a block, a short frame, or the like. This is not limited in this application.

Based on the foregoing solution, for a data frame whose bit rate is less than 1.25 Gbit/s, a payload area of the data frame is divided into a shorter interval, so that a transmission delay of a check overhead corresponding to the interval is reduced, and statistical precision of the check overhead is improved once.

With reference to the second aspect, in some implementations of the second aspect, the at least one check overhead is located in an overhead area of the first data frame, and the at least one bearer unit is configured to carry the service data. It should be understood that, in this solution, the bearer unit is configured to carry only service data, that is, includes only a payload area.

With reference to the second aspect, in some implementations of the second aspect, the bearer unit includes an overhead area and a payload area, and the at least one check overhead is located in the overhead area of the bearer unit. It should be understood that, in this solution, the bearer unit is configured to carry both service data and a check overhead, that is, the bearer unit includes a payload area and an overhead area.

With reference to the second aspect, in some implementations of the second aspect, the overhead area of the bearer unit further includes at least one of a protection switching overhead or a mapping overhead.

With reference to the second aspect, in some implementations of the second aspect, the check overhead is X-bit interleaved parity BIP-8.

With reference to the second aspect, in some implementations of the second aspect, the overhead area of the first data frame includes a path monitoring (PM) overhead, a tandem connection monitoring 1 (TCM1) overhead, a tandem connection monitoring 2 (TCM2) overhead, and a delay measurement overhead. Based on this solution, a delay between a transmit end and a receive end can be calculated more accurately for the first data frame by using a nanosecond-level delay measurement overhead.

With reference to the second aspect, in some implementations of the second aspect, a frame structure of the first data frame is 4 rows*3824 columns of bytes or 2 rows*3824 columns of bytes. Based on this solution, the first data frame provided in this embodiment of this application may be obtained by multiplexing a structure of an ODU data frame to reconstruct the ODU data frame.

According to a third aspect, an embodiment of this application provides a data transmission method. The method may be performed by a receiving device or a component (such as a chip or a chip system) of the receiving device. This is not limited in this application. The method includes: receiving a data frame, and obtaining service data from the data frame through demapping based on N pieces of first indication information. The data frame includes K timeslot blocks, each of the K timeslot blocks includes M bits and N*X bytes, M1 bits in the M bits are used to carry the N pieces of first indication information, and each of the N pieces of first indication information indicates that objects carried in every X bytes in the N*X bytes include at least one of service data or padding. K is an integer greater than or equal to 1, N is an integer greater than or equal to 1, X is an integer greater than 1, M is an integer greater than or equal to N, and M1 is less than M.

With reference to the third aspect, in some implementations of the third aspect, the first indication information indicates that the objects carried in the X bytes further include second indication information, the second indication information is located in a specific byte in the X bytes, and the second indication information indicates a quantity of bytes that are used to carry the service data and that are in (X-1) bytes other than the specific byte.

With reference to the third aspect, in some implementations of the third aspect, a bit other than a bit occupied by the second indication information in the specific byte is used to correct a transmission error of the second indication information.

With reference to the third aspect, in some implementations of the third aspect, every X bytes in the N*X bytes are one timeslot of the data frame.

With reference to the third aspect, in some implementations of the third aspect, Y*N*X bytes in Y adjacent timeslot blocks are one timeslot of the data frame, and Y is an integer greater than or equal to 1.

With reference to the third aspect, in some implementations of the third aspect, Z*N*X bytes in Z equally spaced timeslot blocks are one timeslot of the data frame, and Z is an integer greater than or equal to 1.

With reference to the third aspect, in some implementations of the third aspect, M2 bits in the M bits are used to detect or correct a transmission error of the N bits, and M2 is less than M.

With reference to the third aspect, in some implementations of the third aspect, the data frame further includes location indication information, and the location indication information indicates a start location of a timeslot periodicity.

With reference to the third aspect, in some implementations of the third aspect, a quantity of bytes of the location indication information is 1 or 2.

With reference to the third aspect, in some implementations of the third aspect, a value of X is one of 8, 16, 24, and 32.

With reference to the third aspect, in some implementations of the third aspect, a value of M is a multiple of 8.

For specific beneficial effects brought by the third aspect, refer to the descriptions of the beneficial effects in the first aspect. Details are not described herein again.

According to a fourth aspect, an embodiment of this application provides a data transmission method. The method may be performed by a receiving device or a component (such as a chip or a chip system) of the receiving device. This is not limited in this application. The method includes: receiving a first data frame, where the first data frame includes one or more timeslots; obtaining a second data frame from the first data frame through demapping; and obtaining service data from the second data frame through demapping. A payload area of the second data frame is used to carry service data, the payload area of the second data frame includes at least one bearer unit, each of the at least one bearer unit corresponds to at least one check overhead, each of the at least one check overhead is used to perform bit interleaved parity on a corresponding bearer unit, and a bit rate of the first data frame is less than 1.25 Gbit/s.

With reference to the fourth aspect, in some implementations of the fourth aspect, the at least one check overhead is located in an overhead area of the first data frame, and the at least one bearer unit is configured to carry the service data.

With reference to the fourth aspect, in some implementations of the fourth aspect, the bearer unit includes an overhead area and a payload area, and the at least one check overhead is located in the overhead area of the bearer unit.

With reference to the fourth aspect, in some implementations of the fourth aspect, the overhead area of the bearer unit further includes at least one of a protection switching overhead or a mapping overhead.

With reference to the fourth aspect, in some implementations of the fourth aspect, the check overhead is X-bit interleaved parity BIP-8.

With reference to the fourth aspect, in some implementations of the fourth aspect, the overhead area of the first data frame includes a path monitoring (PM) overhead, a tandem connection monitoring 1 (TCM1) overhead, a tandem connection monitoring 2 (TCM2) overhead, and a delay measurement overhead.

With reference to the fourth aspect, in some implementations of the fourth aspect, a frame structure of the first data frame is 4 rows*3824 columns of bytes or 2 rows*3824 columns of bytes.

For specific beneficial effects brought by the fourth aspect, refer to the descriptions of the beneficial effects in the second aspect. Details are not described herein again.

According to a fifth aspect, an embodiment of this application provides a data transmission apparatus. The apparatus is configured to perform the method provided in the first aspect or the method provided in the second aspect. Specifically, the data transmission apparatus may include units and/or modules configured to perform the method provided in any one of the first aspect or the foregoing implementations of the first aspect, or the data transmission apparatus may include units and/or modules configured to perform the method provided in any one of the second aspect or the foregoing implementations of the second aspect, for example, a processing module and a transceiver module.

In an implementation, the data transmission apparatus may include units and/or modules configured to perform the method provided in any one of the first aspect or the foregoing implementations of the first aspect, or may include units and/or modules configured to perform the method provided in any one of the second aspect or the foregoing implementations of the second aspect, and is a transmit end device. The transceiver module may be a transceiver or an input/output interface. The processing module may be at least one processor. Optionally, the transceiver may be a transceiver circuit. Optionally, the input/output interface may be an input/output circuit.

In another implementation, the data transmission apparatus is a chip, a chip system, or a circuit in the transmit end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

For beneficial effects of the method shown in the fifth aspect and the possible designs of the fifth aspect, refer to the beneficial effects in the first aspect and the possible designs of the first aspect, or refer to the beneficial effects in the second aspect and the possible designs of the second aspect.

According to a sixth aspect, an embodiment of this application provides a data transmission apparatus. The apparatus is configured to perform the method provided in the third aspect or the method provided in the fourth aspect. Specifically, the data transmission apparatus may include units and/or modules configured to perform the method provided in the third aspect, or the data transmission apparatus may include units and/or modules configured to perform the method provided in the fourth aspect, for example, a processing module and a transceiver module.

In an implementation, the data transmission apparatus is a receive end device. The transceiver module may be a transceiver or an input/output interface. The processing module may be at least one processor. Optionally, the transceiver may be a transceiver circuit. Optionally, the input/output interface may be an input/output circuit.

In another implementation, the data transmission apparatus is a chip, a chip system, or a circuit in the receive end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a seventh aspect, an embodiment of this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, an embodiment of this application provides a computer-readable storage medium. The computer-readable storage medium stores program code executed by a device, and the program code is used to perform the method provided in any implementation of the first aspect, the second aspect, the third aspect, or the fourth aspect.

According to a ninth aspect, an embodiment of this application provides a computer program product including instructions. When the computer program product runs on a computer, the computer is enabled to perform the method provided in any implementation of the first aspect, the second aspect, the third aspect, or the fourth aspect.

According to a tenth aspect, an embodiment of this application provides a chip. The chip includes a processor and a communication interface. The processor reads, by using the communication interface, instructions stored in a memory, to perform the method provided in any implementation of the first aspect, the second aspect, the third aspect, or the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any implementation of the first aspect, the second aspect, the third aspect, or the fourth aspect.

According to an eleventh aspect, an embodiment of this application provides a communication system, including at least two data transmission apparatuses in the fifth aspect.

For specific beneficial effects brought by the sixth aspect to the eleventh aspect, refer to the descriptions of the beneficial effects in the first aspect or the descriptions of the beneficial effects in the second aspect. Details are not described herein again.

According to a twelfth aspect, an embodiment of this application provides a data transmission method. The method may be performed by a sending device or a component (such as a chip or a chip system) of the sending device. This is not limited in this application. The method includes: mapping service data to a data frame, and sending the data frame. The data frame includes K timeslot blocks, each of the K timeslot blocks includes M bits and N*X bytes, the M bits are used to carry the N pieces of first indication information, and each of the N pieces of first indication information indicates that objects carried in every X bytes in the N*X bytes include at least one of service data or padding. K is an integer greater than or equal to 1, N is an integer greater than or equal to 1, X is an integer greater than 1, and M is an integer greater than or equal to N.

With reference to the twelfth aspect, in some implementations of the twelfth aspect, N is equal to 1.

With reference to the twelfth aspect, in some implementations of the twelfth aspect, the first indication information indicates that the objects carried in the X bytes further include second indication information. The second indication information is located in a specific byte in the X bytes, and the second indication information indicates a quantity of bytes that are used to carry the service data and that are in (X-1) bytes other than the specific byte.

With reference to the twelfth aspect, in some implementations of the twelfth aspect, a bit other than a bit occupied by the second indication information in the specific byte is used to correct a transmission error of the second indication information.

With reference to the twelfth aspect, in some implementations of the twelfth aspect, a value of M is a multiple of 2.

With reference to the twelfth aspect, in some implementations of the twelfth aspect, the M bits are classified into N groups, and a bit included in each of the N groups is used to carry one of the N pieces of first indication information.

With reference to the twelfth aspect, in some implementations of the twelfth aspect, a value of M is 2, a value of X is 16, and a value of N is 1.

With reference to the twelfth aspect, in some implementations of the twelfth aspect, every X bytes in the N*X bytes are one timeslot of the data frame.

With reference to the twelfth aspect, in some implementations of the twelfth aspect, Y*N*X bytes in Y adjacent timeslot blocks are one timeslot of the data frame, and Y is an integer greater than or equal to 1.

With reference to the twelfth aspect, in some implementations of the twelfth aspect, Z*N*X bytes in Z equally spaced timeslot blocks are one timeslot of the data frame, and Z is an integer greater than or equal to 1.

With reference to the twelfth aspect, in some implementations of the twelfth aspect, the data frame further includes location indication information, and the location indication information indicates a start location of a timeslot periodicity.

With reference to the twelfth aspect, in some implementations of the twelfth aspect, a quantity of bytes of the location indication information is 1 or 2.

With reference to the twelfth aspect, in some implementations of the twelfth aspect, a value of X is one of 8, 16, 24, and 32.

According to a thirteenth aspect, an embodiment of this application provides a data transmission method. The method may be performed by a receiving device or a component (such as a chip or a chip system) of the receiving device. This is not limited in this application. The method includes: receiving a data frame, and obtaining service data from the data frame through demapping based on N pieces of first indication information. The data frame includes K timeslot blocks, each of the K timeslot blocks includes M bits and N*X bytes, the M bits are used to carry N pieces of first indication information, and each of the N pieces of first indication information indicates that objects carried in every X bytes in the N*X bytes include at least one of service data or padding, where K is an integer greater than or equal to 1, N is an integer greater than or equal to 1, X is an integer greater than 1, and M is an integer greater than or equal to N.

With reference to the thirteenth aspect, in some implementations of the thirteenth aspect, N is equal to 1.

With reference to the thirteenth aspect, in some implementations of the thirteenth aspect, the first indication information indicates that the objects carried in the X bytes further include second indication information, the second indication information is located in a specific byte in the X bytes, and the second indication information indicates a quantity of bytes that are used to carry the service data and that are in (X-1) bytes other than the specific byte.

With reference to the thirteenth aspect, in some implementations of the thirteenth aspect, a bit other than a bit occupied by the second indication information in the specific byte is used to correct a transmission error of the second indication information.

With reference to the thirteenth aspect, in some implementations of the thirteenth aspect, a value of M is a multiple of 2.

With reference to the thirteenth aspect, in some implementations of the thirteenth aspect, the M bits are classified into N groups, and a bit included in each of the N groups is used to carry one of the N pieces of first indication information.

With reference to the thirteenth aspect, in some implementations of the thirteenth aspect, a value of M is 2, a value of X is 16, and a value of N is 1.

With reference to the thirteenth aspect, in some implementations of the thirteenth aspect, every X bytes in the N*X bytes are one timeslot of the data frame.

With reference to the thirteenth aspect, in some implementations of the thirteenth aspect, Y*N*X bytes in Y adjacent timeslot blocks are one timeslot of the data frame, and Y is an integer greater than or equal to 1.

With reference to the thirteenth aspect, in some implementations of the thirteenth aspect, Z*N*X bytes in Z equally spaced timeslot blocks are one timeslot of the data frame, and Z is an integer greater than or equal to 1.

With reference to the thirteenth aspect, in some implementations of the thirteenth aspect, the data frame further includes location indication information, and the location indication information indicates a start location of a timeslot periodicity.

With reference to the thirteenth aspect, in some implementations of the thirteenth aspect, a quantity of bytes of the location indication information is 1 or 2.

With reference to the thirteenth aspect, in some implementations of the thirteenth aspect, a value of X is one of 8, 16, 24, and 32.

According to a fourteenth aspect, an embodiment of this application provides a data transmission apparatus. The apparatus is configured to perform the method provided in the twelfth aspect. Specifically, the data transmission apparatus may include units and/or modules configured to perform the method provided in any one of the twelfth aspect or the foregoing implementations of the twelfth aspect.

In an implementation, the data transmission apparatus may include units and/or modules configured to perform the method provided in any one of the twelfth aspect or the foregoing implementations of the twelfth aspect, and is a transmit end device. The transceiver module may be a transceiver or an input/output interface. The processing module may be at least one processor. Optionally, the transceiver may be a transceiver circuit. Optionally, the input/output interface may be an input/output circuit.

In another implementation, the data transmission apparatus is a chip, a chip system, or a circuit in the transmit end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a fifteenth aspect, an embodiment of this application provides a data transmission apparatus. The apparatus is configured to perform the method provided in the thirteenth aspect. Specifically, the data transmission apparatus may include units and/or modules configured to perform the method provided in the thirteenth aspect.

In an implementation, the data transmission apparatus is a receive end device. The transceiver module may be a transceiver or an input/output interface. The processing module may be at least one processor. Optionally, the transceiver may be a transceiver circuit. Optionally, the input/output interface may be an input/output circuit.

In another implementation, the data transmission apparatus is a chip, a chip system, or a circuit in the receive end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a sixteenth aspect, an embodiment of this application provides a processor, configured to perform the method provided in the twelfth aspect or the method provided in the thirteenth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventeenth aspect, an embodiment of this application provides a computer-readable storage medium. The computer-readable storage medium stores program code executed by a device, and the program code is used to perform the method provided in any implementation of the twelfth aspect or the thirteenth aspect.

According to an eighteenth aspect, an embodiment of this application provides a computer program product including instructions. When the computer program product runs on a computer, the computer is enabled to perform the method provided in any implementation of the twelfth aspect or the thirteenth aspect.

According to a nineteenth aspect, an embodiment of this application provides a chip. The chip includes a processor and a communication interface. The processor reads, by using the communication interface, instructions stored in a memory, to perform the method provided in any implementation of the twelfth aspect or the thirteenth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any implementation of the twelfth aspect or the thirteenth aspect.

### BRIEF DESCRIPTION OF DRAWINGS

FIG. 1 is a diagram of a possible application scenario according to an embodiment of this application;
FIG. 2 is a diagram of a possible hardware structure of a network device;
FIG. 3 is a diagram of a frame structure of an OTN frame;
FIG. 4 is a diagram of a structure of a 65-byte timeslot block according to an embodiment of this application;
FIG. 5 is a diagram of a first code table of a 16-byte bit width according to an embodiment of this application;
FIG. 6 is a diagram of a structure of an optical transport network OTN data frame corresponding to FIG. 4 according to an embodiment of this application;
FIG. 7 is a diagram of a structure of a 129-byte timeslot block according to an embodiment of this application;
FIG. 8 is a diagram of a code table of a 32-byte bit width according to an embodiment of this application;
FIG. 9 is a diagram of a structure of an 82-byte timeslot block according to an embodiment of this application;
FIG. 10 is a diagram of a structure of a 162-byte timeslot block according to an embodiment of this application;
FIG. 11 is a diagram of a structure of a 97-byte timeslot block according to an embodiment of this application;
FIG. 12 is a diagram of a structure of an OTN data frame of an adjacent 3*65-byte timeslot block according to an embodiment of this application;
FIG. 13 is a diagram of a structure of a 192-byte timeslot block according to an embodiment of this application;
FIG. 14 is a diagram of a structure of an OTN data frame with a fixed interval of a 3*65-byte timeslot block according to an embodiment of this application;
FIG. 15 is a diagram of a mapping layer of an ODUnew frame according to an embodiment of this application;
FIG. 16 is a diagram of a structure of a first ODUnew frame according to an embodiment of this application;
FIG. 17 is a diagram of a structure of a bearer unit according to an embodiment of this application;
FIG. 18 is a diagram of overheads of an overhead area of a bearer unit according to an embodiment of this application;
FIG. 19 is a diagram of an overhead area of a first ODUnew frame structure according to an embodiment of this application;
FIG. 20 is a diagram of an overhead area of a second ODUnew frame structure according to an embodiment of this application;
FIG. 21 is a diagram of a second ODUnew frame structure according to an embodiment of this application;
FIG. 22 is a schematic flowchart of a data transmission method 2200 according to an embodiment of this application;
FIG. 23 is a schematic flowchart of another data transmission method 2300 according to an embodiment of this application;
FIG. 24 is a diagram of a structure of a communication apparatus according to an embodiment of this application;
FIG. 25 is a diagram of a second code table of a 16-byte bit width according to an embodiment of this application;
FIG. 26 is a diagram of a structure of a 130-bit timeslot block according to an embodiment of this application; and
FIG. 27 is a diagram of timeslot arrangement according to an embodiment of this application.

### DESCRIPTION OF EMBODIMENTS

The following describes technical solutions of this application with reference to accompanying drawings.

For ease of understanding of embodiments of this application, the following descriptions are provided.
1. In the following text descriptions or accompanying drawings in embodiments of this application, the terms such as "first", "second", and various numbers are merely used for differentiation for ease of description, and do not need to be used to describe a specific order or sequence, but are not used to limit the scope of embodiments of this application, for example, are used for distinguishing between different data frames.
2. In the following embodiments of this application, the terms such as "include", "have", and any other variants thereof mean to cover the non-exclusive inclusion, for example, a process, method, system, product, or device that includes a series of steps or units is not necessarily limited to those clearly listed steps or units, but may include another inherent step or unit not clearly listed or inherent to such a process, method, product, or device.
3. In embodiments of this application, the terms such as "example" and "for example" are used to represent an example, an illustration, or a description. Any embodiment or design scheme described with "example" or "for example" should not be explained as being more preferred or having more advantages than another embodiment or design scheme. The terms such as "example" and "for example" are used to present a related concept in a specific manner for ease of understanding.
4. In embodiments of this application, service data is a service carried in an optical transport network or a metro transport network. For example, the service may be an Ethernet service, a packet service, or a wireless backhaul service. The service data may also be referred to as a service signal, client data, or client service data. It should be understood that a type of the service data is not limited in embodiments of this application.
5. In this application, "indicating" may include "directly indicating" and "indirectly indicating". When a piece of information is described to indicate A, the information may directly indicate A or indirectly indicate A, but it does not indicate that the information definitely carries A.
6. In embodiments of this application, an OTN frame is merely used as an example for description of embodiments. It should be understood that, in future technology development, another bearer OTN frame and an MTN frame are also applicable to this application.
7. In embodiments of this application, the character "*" is an operation symbol, and represents a product.

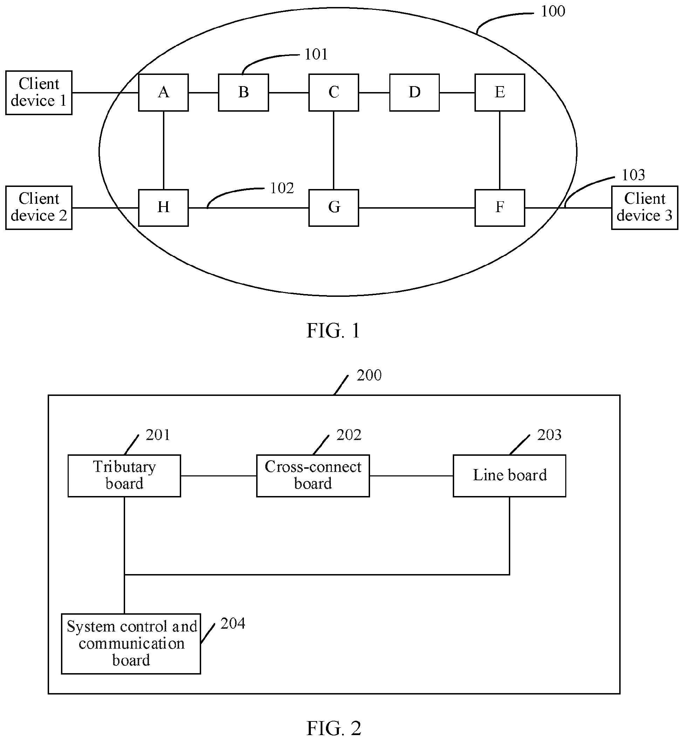

Embodiments of this application are applicable to an optical network, for example, an optical transport network (optical transport network, OTN). One OTN is usually formed by connecting a plurality of devices by using an optical fiber, and may constitute different topology types such as a linear topology, a ring topology, and a mesh topology based on specific requirements. An OTN 100 shown in FIG. 1 includes eight OTN devices 101, that is, devices A to H. 102 indicates an optical fiber, configured to connect two devices. 103 indicates a client service interface, configured to receive or send client service data. As shown in FIG. 1, the OTN 100 is configured to transmit service data for client devices 1 to 3. The client device is connected to the OTN device through a client service interface. For example, in FIG. 1, the client devices 1 to 3 are respectively connected to the OTN devices A, H, and F.

Based on an actual requirement, one OTN device may have different functions. Usually, the OTN device includes an optical layer device, an electrical layer device, and a photoelectric hybrid device. The optical layer device is a device that can process an optical layer signal, for example, an optical amplifier (optical amplifier, OA) or an optical add-drop multiplexer (optical add-drop multiplexer, OADM). The OA may also be referred to as an optical line amplifier (optical line amplifier, OLA), and is mainly configured to amplify an optical signal, to support a longer distance transmission when specific performance of the optical signal is ensured. The OADM is configured to perform space transformation on the optical signal, so that the optical signal can be output from different output ports (sometimes referred to as directions). The electrical layer device is a device that can process an electrical layer signal, for example, a device that can process an OTN signal. The photoelectric hybrid device is a device that has a capability of processing an optical layer signal and an electrical layer signal. It should be noted that one OTN device may integrate a plurality of different functions based on a specific integration requirement. Technical solutions provided in this application are applicable to OTN devices that have different forms and degrees of integration and that include an electrical layer function.

It should be noted that a data frame structure used by an OTN device in embodiments of this application is an OTN frame, which is used to carry various service data and provide rich management and monitoring functions. The OTN frame may be an optical data unit (Optical Data Unit k, ODUk) frame, an ODUCn frame, or an ODUflex frame, or may be an optical transport unit k (optical transport unit k, OTUk) frame, an OTUCn frame, a flexible OTN (FlexO) frame, or the like. A difference between the ODU frame and the OTU frame lies in that the OTU frame includes the ODU frame and an OTU overhead. Herein, k represents different rate levels. For example, k=1 represents 2.5 Gbps, k=4 represents 100 Gbps, and Cn represents a variable rate, which is specifically a rate that is a positive integer multiple of 100 Gbps. Unless otherwise specified, the ODU frame is any of the ODUk frame, the ODUCn frame, or the ODUflex frame, and the OTU frame is any of the OTUk frame, the OTUCn frame, or the FlexO frame. It should be further noted that, with development of OTN technologies, a new type of OTN frame may be defined, and is also applicable to this application.

FIG. 2 is a diagram of a possible hardware structure of a network device, for example, the device A in FIG. 1. Specifically, an OTN device 200 includes a tributary board 201, a cross-connect board 202, a line board 203, an optical layer processing board (not shown in the figure), and a system control and communication board 204. Based on specific requirements, types and quantities of boards included in a network device may be different. For example, a network device used as a core node includes no tributary board 201. For another example, a network device used as an edge node includes a plurality of tributary boards 201, or includes no optical cross-connect board 202. For still another example, a network device supporting only an electrical layer function may include no optical layer processing board.

The tributary board 201, the cross-connect board 202, and the line board 203 are configured to process an electrical layer signal of the OTN. The tributary board 201 is configured to receive and send various client services such as an SDH service, a packet service, an Ethernet service, and a forward service. Further, the tributary board 201 may be divided into a client-side optical transceiver module and a signal processor. The client-side optical transceiver module may also be referred to as an optical transceiver, and is configured to receive and/or send service data. The signal processor is configured to map service data to a data frame and demap the service data from the data frame. The cross-connect board 202 is configured to exchange data frames, to complete exchange of one or more types of data frames. The line board 203 mainly implements processing of a line-side data frame. Specifically, the line board 203 may be divided into a line-side optical module and a signal processor. The line-side optical module may be referred to as an optical transceiver, and is configured to receive and/or send a data frame. The signal processor is configured to multiplex and demultiplex a line-side data frame, or map and demap a line-side data frame. The system control and communication board 204 is configured to implement system control, and specifically, may collect information from different boards, or send a control instruction to a corresponding board. It should be noted that, unless otherwise specified, there may be one or more specific components (for example, signal processors). This is not limited in this application. It should be further noted that a type of a board included in the device, a function design of the board, and a quantity of boards are not limited in this application. It should be noted that, during specific implementation, the foregoing two boards may alternatively be designed as one board. In addition, the network device may further include a standby power supply, a heat dissipation fan, and the like.

With advent of the fifth-generation fixed network (Fifth Generation Fixed Network, F5G) era, private line service requirements in different scenarios are gradually refined, for example, industry production networks and high-quality user terminals, which have increasing requirements for high-quality connections. These private line services are characterized by a small bandwidth and a large quantity, and require flexible bandwidth adjustment. Currently, an optical service unit (optical service unit, OSU) frame is used to carry a small-granularity service in an OTN. In addition to providing a fine-grained bandwidth granularity, the OSU does not depend on a conventional OTN timeslot structure. In addition, the OSU effectively enhances service carrying flexibility, and matches the evolution trend of packet services. This process is based on a mapping manner of a flexible tributary unit (flexible tributary unit, TUflex), that is, a plurality of services are separately mapped and encapsulated into a plurality of OSUs, different OSUs correspond to different channels of TUflex, and the plurality of channels of TUflex are multiplexed into an optical payload unit (optical payload unit, OPU) frame.

In a time division multiplexing (time division multiplexing, TDM) solution, for each service, data is periodically sent according to a higher-order defined timeslot bit width. A timeslot bit width of the OSU may be 192 bytes. For a 10.4 Mbit/s pipe, a data sending periodicity is 148 µs.

Although the OSU technology can be introduced to efficiently carry services with different granularities ranging from 2M to 100 Gbps. However, for some service signals with a smaller bandwidth, for example, a 10M service signal, when the 10M service signal is mapped to a 10.4 Mbit/s OSU pipe, about 185-byte service signal data needs to be buffered before being sent. This process needs to consume about 148 µs, and consequently service signal transmission time is greatly increased. In addition, for a 10.4 Mbit/s timeslot bandwidth of the OSU, when an intermediate node performs TDM switching, in a process in which received input timeslot data is forwarded to a specified sending egress timeslot, a delay of 148 µs in a sending periodicity may even exist.

Therefore, the current TDM scheduling solution based on the 192-byte timeslot bit width of the OSU has a problem of a large transmission delay of a small-bandwidth client signal. To resolve the foregoing problem, in embodiments of this application, a data frame division method is redefined based on a current OTN frame structure and an OSU frame structure, to reduce a delay of transmitting a small-bandwidth service in a TDM manner by an OTN device.

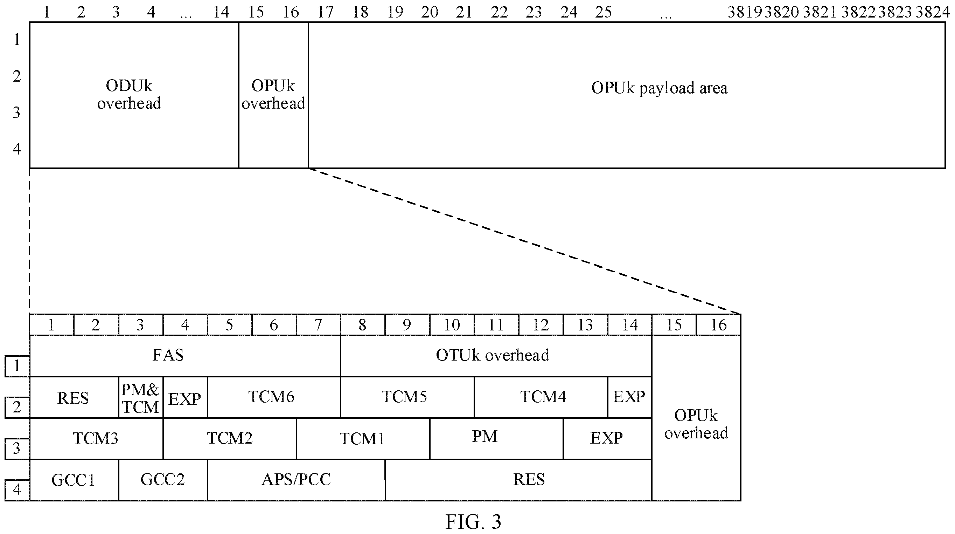

FIG. 3 is a diagram of a frame structure of an OTN frame. As shown in FIG. 3, the OTN frame has a frame structure with four rows and a plurality of columns, including an overhead area, a payload area, and a forward error correction (Forward Error Correction, FEC) area. Specifically, for the structure of the OTN frame, refer to related descriptions in a current protocol. Details are not described herein. The payload area of the OTN frame is divided into a plurality of payload blocks (Payload Block, PB). Each PB occupies a location of a fixed length (also referred to as a size) in the payload area, for example, 128 bytes. For example, overheads that may be included in the OTN frame are shown in Table 1.

**Table 1 Example of overheads potentially carried in an OTN frame**

| Name | Meaning |
|---|---|
| FAS | Frame alignment signal (Frame Alignment Signal, FAS), used for frame alignment. Specifically, the FAS may be set to a fixed value, for example, four-byte "0xF6F62828". |
| TTI | Trail trace identifier (Trail Trace Identifier, TTI), used to place trail trace information of a frame. |
| BEI | Backward error indication (Backward Error Indication, BEI), indicating whether a bit error exists in a path in a receiving direction. |
| BDI | Backward defect indication (Backward Defect Indication, BDI), indicating whether a path in a receiving direction is faulty. |
| STAT | Status (Status), used to identify path status information, for example, an alarm indication signal or an idle signal indication that is transmitted downstream. |
| PM | Path monitoring (Path Monitoring, PM), used to complete an end-to-end path monitoring function of a frame, and including one or more of the TTI, the BIP, the BEI, the BDI, or the STAT. |
| SM | Section monitoring (Section Monitoring, SM) overhead, used to complete a section monitoring function. |
| TCM | Tandem connection monitoring (Tandem Connection Monitoring, TCM) overhead, used to complete a tandem connection monitoring function of a frame. |
| PT | Payload type (Payload Type, PT), indicating a specific mapping manner currently used to map service data to an OSU frame, and/or a type of a service currently carried in the frame. |
| DM | Delay measurement (Delay Measurement, DM), used to provide an end-to-end delay measurement function of a frame. |
| APS | Automatic protection switching (Automatic Protection Switching, APS), used to provide an automatic protection switching function of a frame. |
| GCC | General communication channel (General Communication Channel, GCC), used to provide a function of the general communication channel. |
| RES | Reserved (reserved for future international standardization) |

It should be understood that the foregoing descriptions of the OTN frame structure are merely an example. Another variant of the OTN frame is also applicable to this application, for example, an OTN frame that does not include an FEC area; for another example, a frame structure with a row quantity and a column quantity that are different from those of an OTN frame 302. It should be understood that the PB may also be referred to as a timeslot, a timeslot block, a time slice, or the like. A name of the PB is not limited in this application.

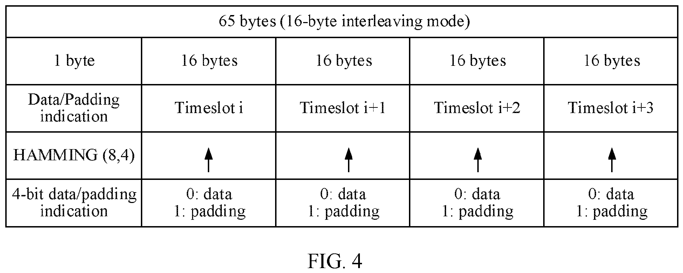

Based on the OTN frame shown in FIG. 3, FIG. 4 is a diagram of a structure of a 65-byte timeslot block according to an embodiment of this application. A corresponding OTN data frame structure is a data frame structure of a 65-byte timeslot block (which may also be referred to as a resource block or a resource unit), and a timeslot bit width of the 65-byte timeslot block is 16 bytes. As shown in FIG. 4, a structure of the 65-byte timeslot block is defined as being formed by one independent byte and four groups of 16 bytes.

It should be noted that, in timeslot block division of the OTN frame shown in FIG. 4, four bits included in one independent byte independently indicate that objects carried in every 16 bytes include at least one of data or padding. That is, objects carried in every 16 bytes are indicated by one independent bit, and the indication bit may be referred to as a control code.

It should be understood that, that four bits independently indicate that objects carried in every 16 bytes include at least one of data or padding may include the following several cases.
1. One bit indicates that all the objects carried in the corresponding 16 bytes are data.
2. One bit indicates that all the objects carried in the corresponding 16 bytes are padding.
3. One bit indicates that all the objects carried in the corresponding 16 bytes are data and padding.
4. One bit indicates that all the objects carried in the corresponding 16 bytes are data, padding, and other information.

In the foregoing scenario 3 and scenario 4, second indication information may indicate a size (for example, a quantity of bytes) of service data in the objects carried in the 16 bytes, or may indicate a size (for example, a quantity of bytes, a quantity in a unit of two bytes, or a quantity of bits) of padding in the objects carried in the 16 bytes.

It should be understood that, in timeslot block division of the OTN frame shown in FIG. 4, eight bits included in one independent byte may independently indicate that objects carried in every 16 bytes include at least one of data or padding. That is, objects carried in every 16 bytes are indicated by two bits, that is, control codes corresponding to every 16 bytes are two bits. In this case, that two bits independently indicate that objects carried in the corresponding 16 bytes include at least one of data or padding may also include the foregoing four cases, and details are not described herein again.

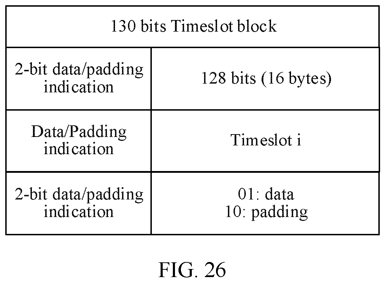

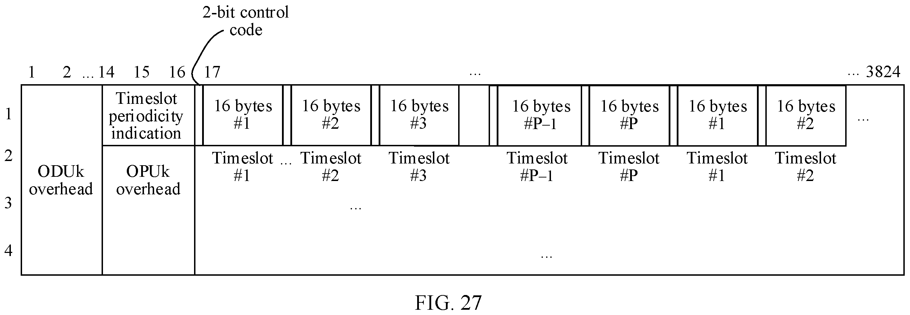

In addition, the OTN frame may alternatively be divided in an independent timeslot block interleaving mode, for example, in a 130-bit timeslot block interleaving mode. In this case, the timeslot block division of the OTN frame may be shown in FIG. 26. In this scenario, each 130-bit timeslot block includes a 2-bit control indication and a 128-bit (16-byte) payload. FIG. 27 is a diagram of timeslot arrangement. An OPU frame is divided into P timeslots, and each timeslot block is 130 bits.

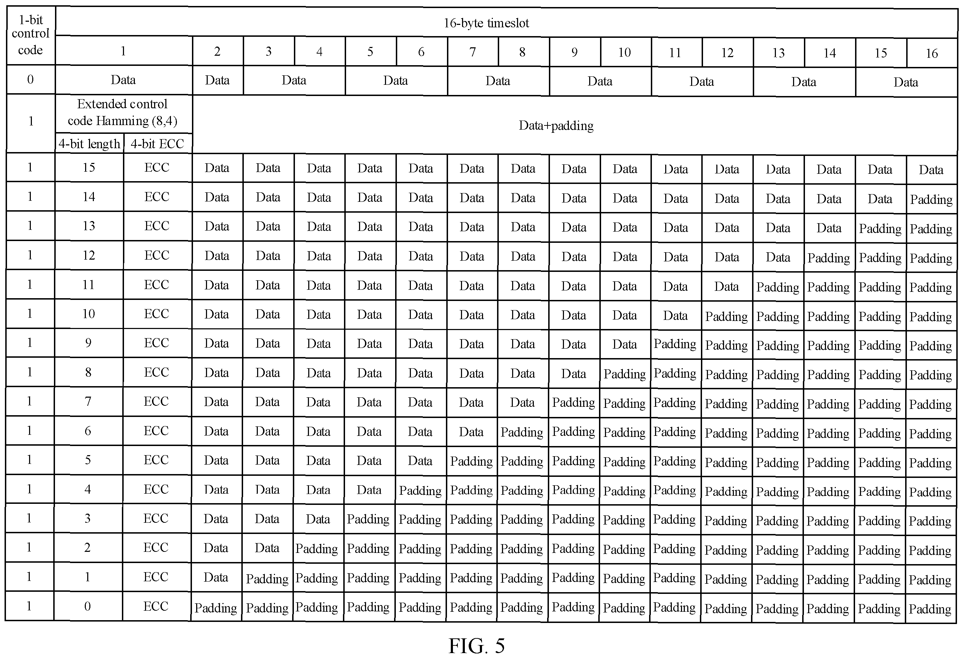

In an implementation, when a 1-bit control code indicates 16 bytes, a code table shown in FIG. 5 may be established for indication. Specifically, when the 1-bit control code is 0, it indicates that all the 16 bytes are data. When the 1-bit control code is 1, a first byte in the 16 bytes is defined as the second indication information (for example, an extended control code in FIG. 5), and the second indication information includes a 4-bit valid data amount indication and 4-bit check information. The 4-bit valid data amount indicates a quantity of bytes that are in the remaining 15 bytes and that carry the service data. It should be understood that a 4-bit padding amount may alternatively indicate a quantity of bytes that are in the remaining 15 bytes and that carry padding. This is not limited in this application.

It should be understood that the quantity of bits indicating padding or data in the second indication information is merely an example rather than a limitation, that is, another quantity of bits may be used for indication. This is not limited in this application.

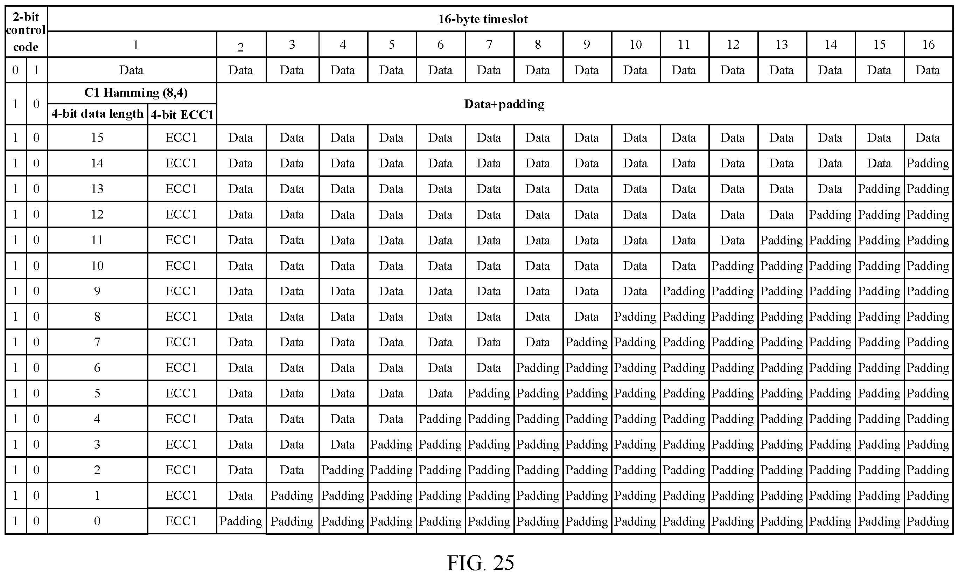

In another implementation, when a 2-bit control code indicates 16 bytes, a code table shown in FIG. 25 may be established for indication. Specifically, when a value of the 2-bit control code is 01, it indicates that all the 16 bytes are data. When the value of the 2-bit control code is 10, it indicates that all or some of the 16 bytes are padding. When some of the 16 bytes are padding, a first byte in the 16 bytes may be further defined as the second indication information (for example, an extended control code C1 in FIG. 25), and the second indication information includes a 4-bit valid data amount indication and 4-bit check information. The 4-bit valid data amount indicates a quantity of bytes that are in the remaining 15 bytes and that carry the service data. It should be understood that a 4-bit padding amount may alternatively indicate a quantity of bytes that are in the remaining 15 bytes and that carry padding. This is not limited in this application.

In addition, when the valid data amount indicated by the second indication information is 0, a byte used to carry padding may be further defined as other indication information or control information, that is, the byte used to carry padding is used to transmit other indication information or control information. For example, a second byte in 2 to 16 bytes may be defined to indicate a type of a timeslot in which the 16 bytes are located, for example, the timeslot is an added timeslot or a deleted timeslot. Alternatively, an indication field indicating that a timeslot in which the 16 bytes are located is a sending timeslot or a receiving timeslot may be defined. Alternatively, an indication field indicating an identifier of a data frame corresponding to a timeslot in which the 16 bytes are located is defined. Alternatively, a field indicating an identifier of a timeslot in which the 16 bytes are located may be defined. In addition, an indication field corresponding to an indication field transmission error may be further added on the basis of the defined indication field, to carry error correction indication information for correcting a transmission error of the defined indication field.

It should be noted that FIG. 25 is merely an example. A location of a byte occupied by each indication field is not limited in this application. For example, more bits indicate objects carried in 16 bytes. When the quantity of bits for indication is greater than 2, error correction protection may be further performed on 2-bit indication information.

In addition, specific values of the two bits may be 01 and 10, or 00 and 11, to keep a Hamming distance between the two values as 2. A single bit is used for indication, so that overheads can be reduced, thereby improving data transmission efficiency.

In another implementation, for example, when an amount of service data and an amount of padding are the same, if one independent byte indicates that objects carried in corresponding 15 bytes are only data and padding, values of extended control codes in the code table shown in FIG. 5 are the same. Certainly, in this special case, preset information may further indicate that the amount of service data and the amount of padding that are carried in the X bytes are equal, so as to simplify the code table.

It should be noted that, for the one independent byte, bit error correction protection may be performed on four independently indicated bits through Hamming code (HAMMING Code) HAMMING (8,4) encoding, or error detection may be performed by using a CRC code.

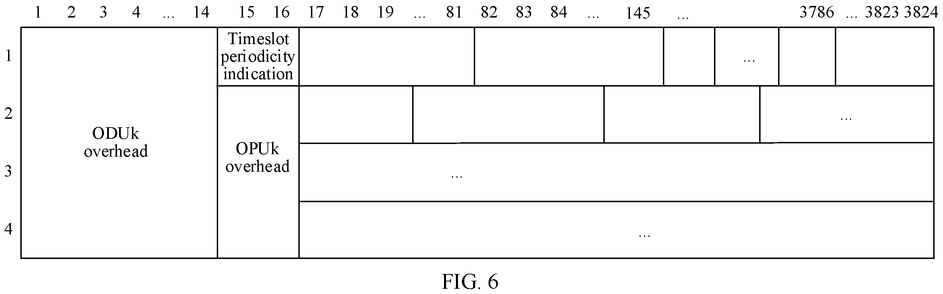

In addition, as shown in FIG. 6, when timeslot division is performed for an OPU payload area according to the 65-byte timeslot block shown in FIG. 4, overheads (two bytes) in a 15^{th} column and a 16^{th} column of a first row in the OTN frame structure may indicate a start location of a timeslot block periodicity.

In an implementation, a timeslot block may be divided into 58 timeslot blocks by row. For remaining bytes that are less than 65 in a frame, all the remaining bytes may be used to carry padding. In this case, one OTN frame can be divided into 232 timeslot blocks shown in FIG. 4, and eight bits in each of a 15^{th} column and a 16^{th} column of one row may indicate a start location of each timeslot block periodicity.

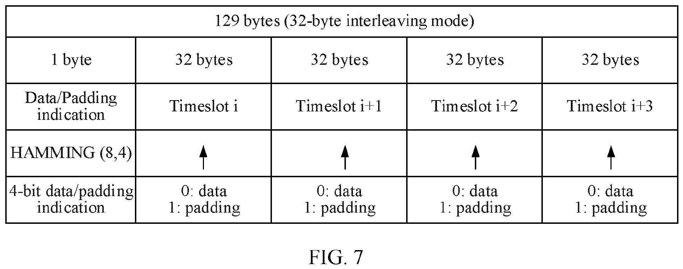

FIG. 7 is a diagram of a structure of a 129-byte timeslot block according to an embodiment of this application. A corresponding OTN data frame structure is a data frame structure of a 129-byte timeslot block. As shown in FIG. 7, a structure of the 129-byte timeslot block is defined as being formed by one independent byte and four groups of 32 bytes. Four bits included in one independent byte independently indicate that objects carried in every 32 bytes include at least one of data or padding.

In an implementation, with reference to the descriptions in FIG. 4, for the one independent byte, bit error correction protection may still be performed on four independently indicated bits through HAMMING (8,4) encoding, or error detection may be performed by using a CRC code.

Certainly, when timeslot division of the OTN frame is performed according to the 129 bytes shown in FIG. 7, the method shown in FIG. 6 may still be used for a start location of each timeslot, and details are not described herein again.

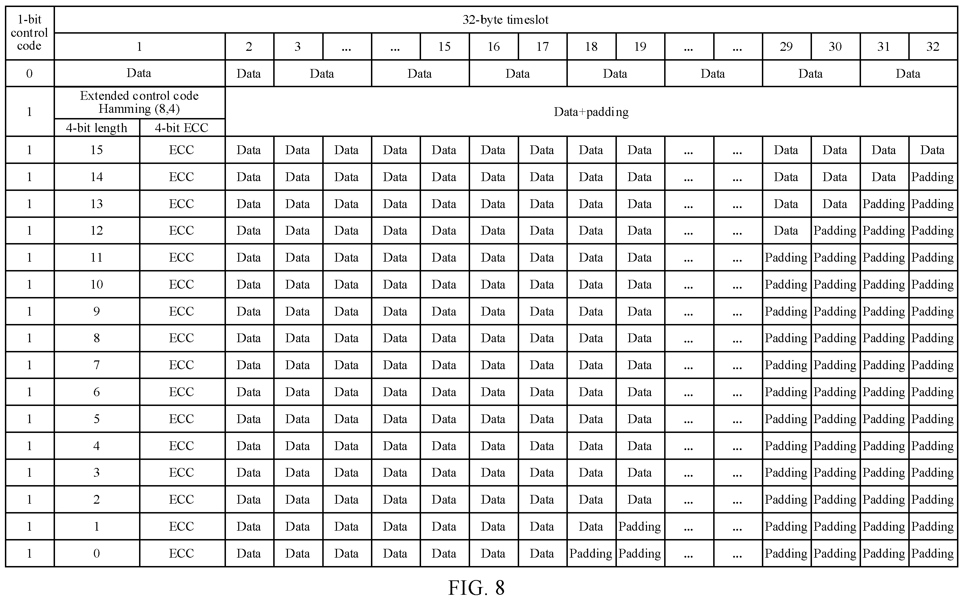

When the timeslot block division manner shown in FIG. 7 is used, a codebook including a 1-bit control code and a 4-bit extended control code that indicate that objects carried in every 32 bytes include data or padding may be shown in FIG. 8. In this case, because a 1-byte extended code cannot directly indicate all data byte combinations, a 1- byte extended code indirectly indicates a quantity of bytes that carry the service data. That is, a minimum value of valid data in a 32-byte timeslot is defined, and the 1- byte extended code indicate only an increment relative to the minimum value of the valid data.

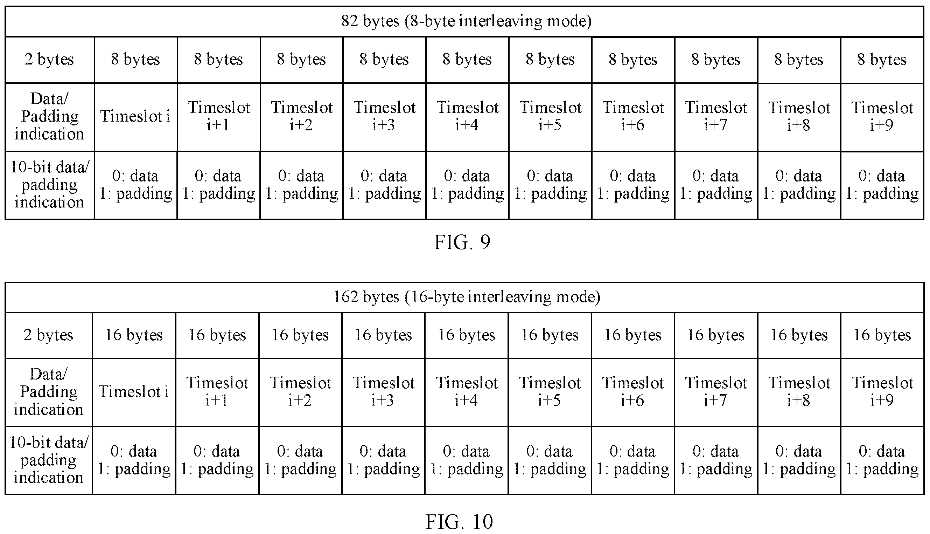

FIG. 9 and FIG. 10 are respectively diagrams of structures of an 82-byte timeslot block and a 162-byte timeslot block according to embodiments of this application. FIG. 9 uses an 8-byte interleaving mode, and FIG. 10 uses a 16-byte interleaving mode. Specifically, for the timeslot block formed by 82 bytes shown in FIG. 9 and the timeslot block formed by 162 bytes shown in FIG. 10, 10 bits separately indicate objects carried in every 8 bytes or objects carried in every 16 bytes, and two bits may be used to detect or correct a transmission error of 10 bits used for indication.

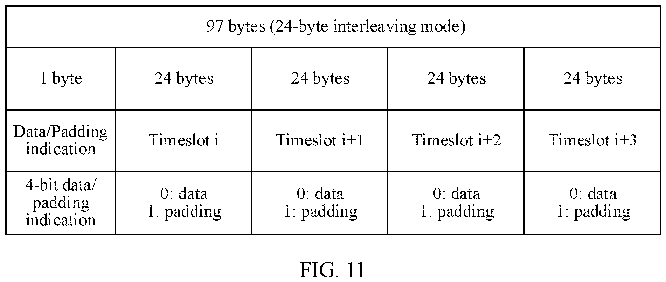

FIG. 11 is a diagram of a structure of a 97-byte timeslot block according to an embodiment of this application. When an OTN frame is divided by using the timeslot block shown in FIG. 11, a corresponding timeslot of the OTN data frame is 24 bytes. A frame structure of the OTN frame may be divided into a plurality of timeslot blocks shown in FIG. 11. In the timeslot block, four bits included in one byte independently indicate that objects carried in every 24 bytes are data or padding.

Similarly, bit error correction protection may be performed on the four independently indicated bits through HAMMING (8,4).

When timeslot division of the OTN frame is performed according to the 97 bytes shown in FIG. 11, the method shown in FIG. 6 may still be used for a start location of each timeslot, and details are not described herein again.

It should be understood that, for the timeslot blocks shown in FIG. 9 to FIG. 11, a code table similar to that shown in FIG. 5 or FIG. 11 still exists.

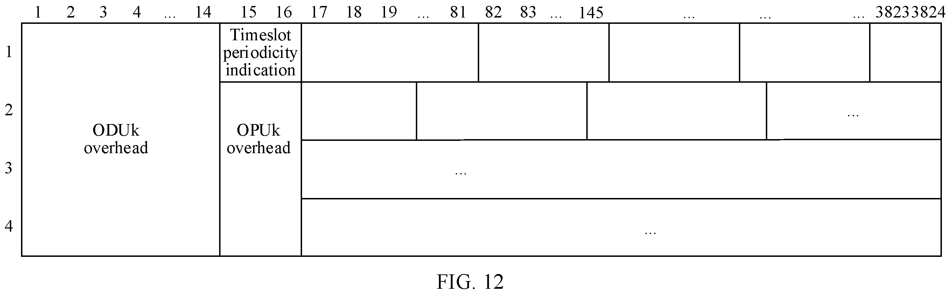

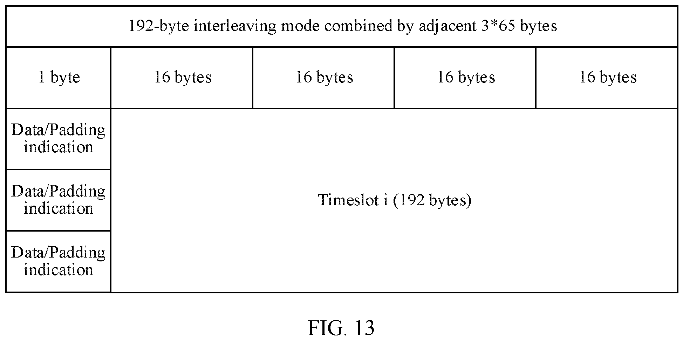

To meet requirements of some large-capacity scenarios, for example, when a timeslot granularity is 100M and a capacity is at a T level, an embodiment of this application further provides a diagram of a structure of an OTN data frame of a timeslot block of 3*65 bytes shown in FIG. 12. In FIG. 12, three adjacent groups of 65 bytes form a new timeslot block structure. A timeslot of the OTN frame is 3*4*16, and a structure is shown in FIG. 13. In FIG. 13, 192 bytes are used to carry data or padding, and 12 bits in three bytes indicate objects carried in every 16 bytes.

In a possible implementation, the 12-bit indication method is the same as the indication method of the 65-byte timeslot block shown in FIG. 4, that is, each bit independently indicate objects carried in 16 bytes. For this indication process, refer to the related descriptions in FIG. 5. Details are not described herein again.

In another implementation, values of the 12 bits are consistent. In this case, it indicates that objects carried in the 192 bytes are the same.

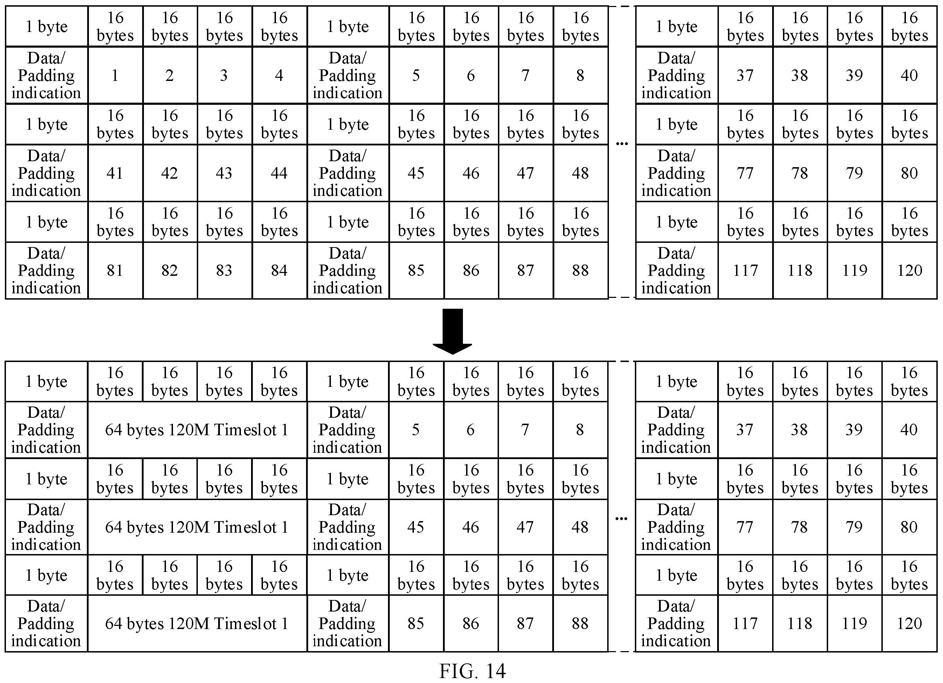

In FIG. 12, adjacent first timeslot blocks are defined as a timeslot with a larger bit width. In another implementation, first timeslot blocks with a fixed interval may be further combined into a timeslot with a larger bit width, as shown in FIG. 14. In FIG. 14, 120 groups of 16 bytes may be obtained through division in an OPU0 area of an ODU0. Assuming that a bandwidth corresponding to every 16 bytes is 10M, a first timeslot block of 65 bytes forms a bandwidth timeslot of 40M. In this case, three groups of 65 bytes with an interval of 40 may be logically defined as a bandwidth timeslot of 120M.

It should be noted that, in FIG. 12 and FIG. 14, only three 65-byte timeslot blocks are selected to define a timeslot of a large bit width. For division of the 129-byte timeslot block shown in FIG. 7, the 82-byte timeslot block shown in FIG. 9, the 162-byte timeslot block shown in FIG. 10, the 97-byte timeslot block shown in FIG. 11, and other timeslot blocks listed in this application, a timeslot of a large bit width defined by bundling Y adjacent first timeslot blocks shown in FIG. 12 may be used, or a timeslot of a large bit width defined by bundling Z timeslot blocks with a fixed interval shown in FIG. 14 may be used.

It should be understood that, when a granularity of the timeslot of a large bit width is obtained by bundling the Y adjacent first timeslot blocks in the manner shown in FIG. 12, there is only one timeslot in a corresponding OTN frame, and a quantity of bytes of the timeslot is Y*N*X. When a granularity of the timeslot of a large bit width is obtained by bundling the Z adjacent first timeslot blocks in the manner shown in FIG. 14, there may be a plurality of timeslots in a corresponding OTN frame, for example, a timeslot with Z*N*X bytes or a timeslot with X bytes, so that the corresponding OTN frame not only supports a timeslot of a large bit width and a large bandwidth, but also supports a bandwidth of a small bit width and a fine granularity, thereby meeting different application scenarios.

To improve a check capability of an OTN frame and meet requirements of some overheads on transmission time and statistical precision, an embodiment of this application further provides an OTN frame structure. For brevity of description, in this application, ODUnew is used as the OTN frame for description. It should be noted that the name is merely an example, and does not constitute a limitation on a frame structure defined in this application. For example, ODUnew may be in a structure of 2 rows*3824 columns of bytes, or in a structure of 4 rows*3824 columns of bytes. In embodiments of this application, an ODUnew frame with a structure of 4 rows*3824 columns of bytes is used as an example for descriptions.

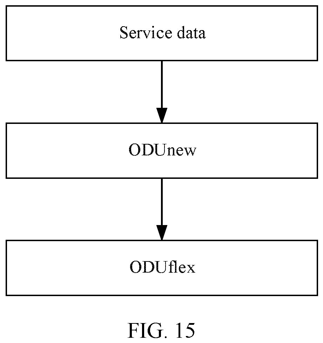

FIG. 15 is a diagram in which a mapping layer of an ODUnew frame is added. Specifically, as shown in FIG. 15, service data is mapped to ODUnew, and then mapped to ODUflex from ODUnew. ODUflex may be an OTN frame obtained through division based on any timeslot block in FIG. 4, FIG. 6, FIG. 7, FIG. 9 to FIG. 11, FIG. 12, or FIG. 13, and another OTN frame that meets a timeslot block division requirement and that is not described in detail in embodiments of this application.

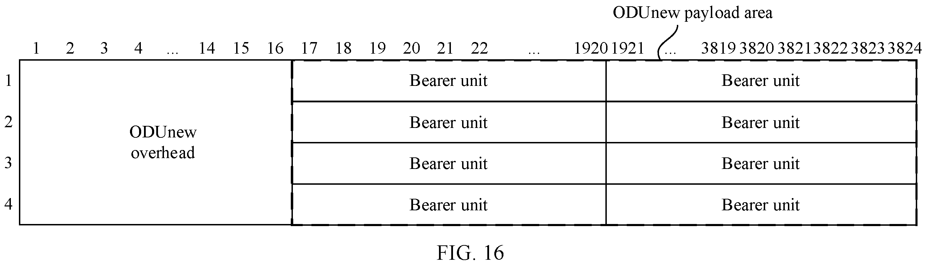

FIG. 16 is a diagram of a structure of a first ODUnew frame according to an embodiment of this application. As shown in the figure, the ODUnew frame is in a structure of 4 rows*3824 columns of bytes, including an overhead area (the first 16 columns of the four rows) and a payload area (a 17^{th} column to a 3824^{th} column of the four rows). Each row of the payload area includes two bearer units. Specifically, each bearer unit may correspond to at least one check overhead, and the check overhead area is used to perform bit interleaved parity on a corresponding bearer unit.

It should be noted that, in embodiments of this application, the bearer unit is represented as at least one area obtained by dividing the first data frame, and may also be referred to as an area (area), an interval, a block, a short frame, or the like. This is not limited in this application. The check overhead may be BIP-X, for example, BIP-8. This is not limited in this application.

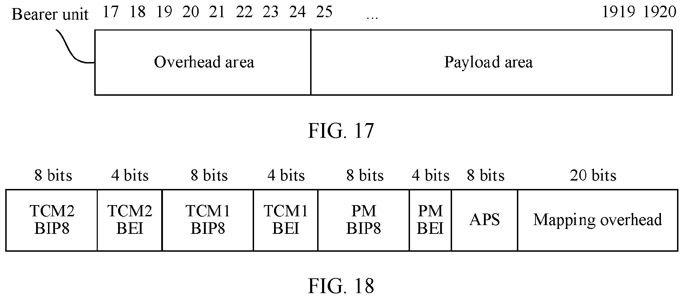

In an implementation, as shown in FIG. 17, the bearer unit may be divided into an overhead area and a payload area, and the overhead area of the bearer unit includes at least one check overhead. Specifically, the overhead area of the bearer unit includes eight bytes (columns 17 to 24), and the payload area includes columns 25 to 1920. The eight bytes of the overhead area of the bearer unit may be shown in FIG. 18. Specifically, the overhead includes an 8-bit TCM2 BIP8 overhead, a 4-bit TCM2 BEI overhead, an 8-bit TCM1 BIP8 overhead, a 4-bit TCM1 BEI overhead, an 8-bit PM BIP8 overhead, a 4-bit PM BEI overhead, an 8-bit APS overhead, and a 20-bit mapping overhead.

Generally, there is no correspondence between an overhead area and a payload area of a bearer unit, and the overhead area of the bearer unit is used to check an object carried in a payload area of a bearer unit that is transmitted before the overhead area of the bearer unit.

It should be understood that, compared with a conventional OTN frame structure, an overhead area of a low-speed pipe, that is, an overhead area of the bearer unit, is defined in a payload area of the OTN frame while an overall structure of the OTN frame remains unchanged, and requirements on transmission time and statistical precision of APS, BIP8, and mapping overheads are improved by using the overhead area of the bearer unit.

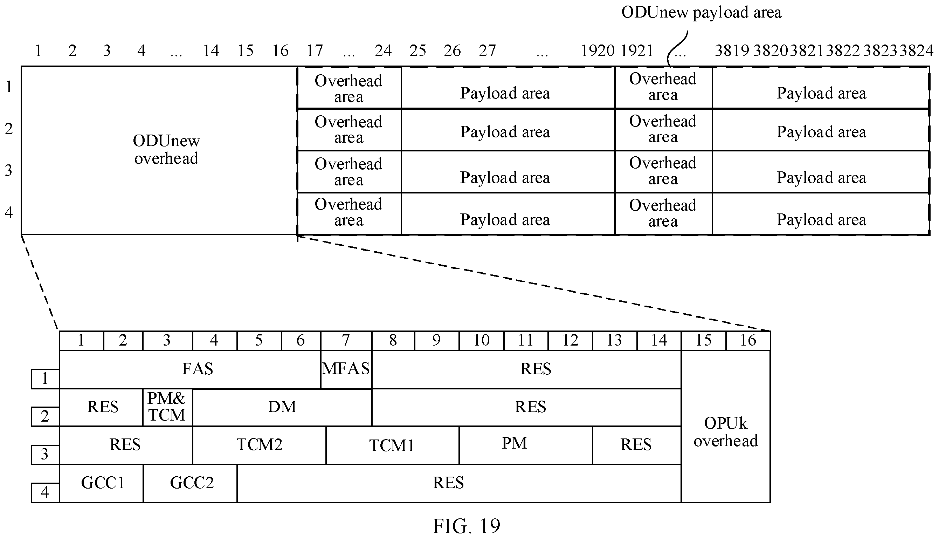

In the design of the bearer unit shown in FIG. 17, an overhead area of the ODUnew frame shown in FIG. 16 may reuse some overheads of ODUflex in a current related standard, for example, overhead definitions such as FAS/MFAS, PM, TCM1, TCM2, PM&TCM, GCC1 and GCC2, and a nanosecond-level delay measurement (delay measurement, DM) overhead is added, as shown in FIG. 19.

It should be noted that the DM overhead in embodiments of this application is a delay measurement overhead with higher precision. The DM overhead may include a correction amount, and the correction amount indicates time at which a receive end receives a data frame sent by a transmit end, and processes the data frame. In other words, the correction amount is a period of time from a moment at which the receive end receives the data frame sent by the transmit end to a moment at which the receive end sends a replied data frame to the transmit end. Based on the DM overhead, delay measurement of the data frame can reach measurement at a nanosecond level, a result is more accurate, and an error of the delay measurement is corrected.

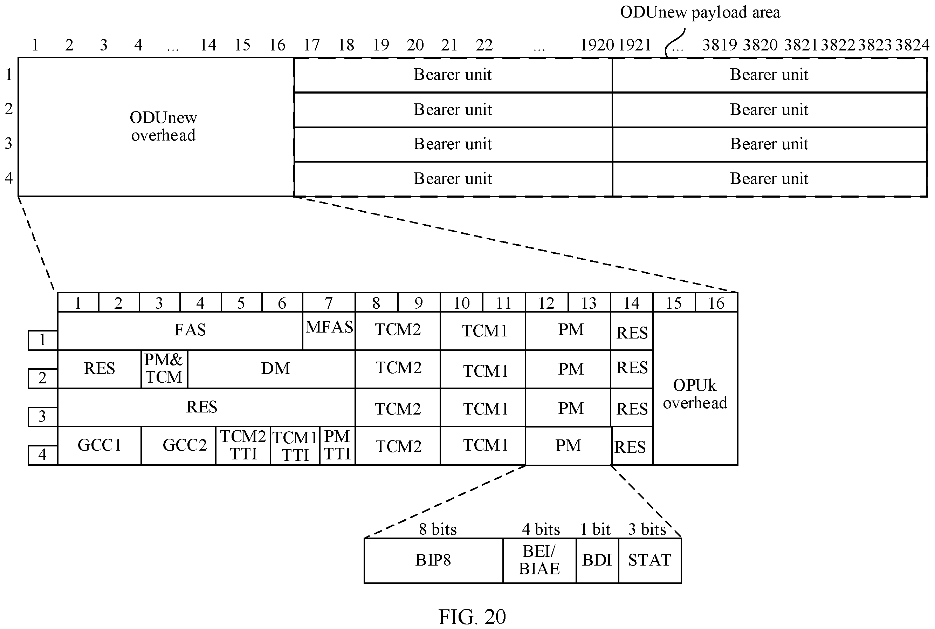

In another implementation, when the overhead area of the bearer unit includes only the mapping overhead or the bearer unit is only the payload area of the ODUnew frame and is only used to carry service data, the overhead area of the ODUnew frame shown in FIG. 16 may reuse some overheads of ODUflex in a current related standard, for example, overhead definitions such as FAS/MFAS, PM, PM&TCM, GCC1, and GCC2, a nanosecond-level DM overhead is added, and TCM2 TTI, TCM1 TTI, and PM TTI overheads are added to the last row and other overheads are reserved, as shown in FIG. 20. Specifically, a 2-byte TCM1 overhead, a 2-byte TCM2 overhead, and a 2-byte PM overhead are set in each row, and correspond to a current row. The 2-byte PM overhead includes 8-bit BIP8 (used to check objects carried in an interval from columns 15 to 3824 in a previous row), 4-bit BEI/BIAE, 1-bit BDI, and 3-bit STAT information.

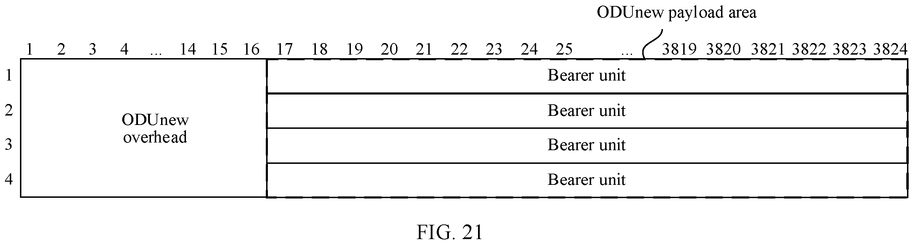

FIG. 21 is a diagram of a structure of a second ODUnew frame according to an embodiment of this application. As shown in the figure, the ODUnew frame is in a structure of 4 rows*3824 columns of bytes, including an overhead area (16 columns of the first four rows) and a payload area (a 17^{th} column to a 3824^{th} column of the four rows). Each row of the payload area includes one bearer unit. Specifically, the bearer unit of the second ODUnew frame may be defined as the structure shown in FIG. 17 with reference to the overhead area of the ODUnew frame shown in FIG. 19. Alternatively, the bearer unit of the second ODUnew frame may be defined as an overhead area that includes only a mapping overhead, or the bearer unit is only a payload area of the ODUnew frame, with reference to the overhead area of the ODUnew frame shown in FIG. 20. Details are not described herein again.

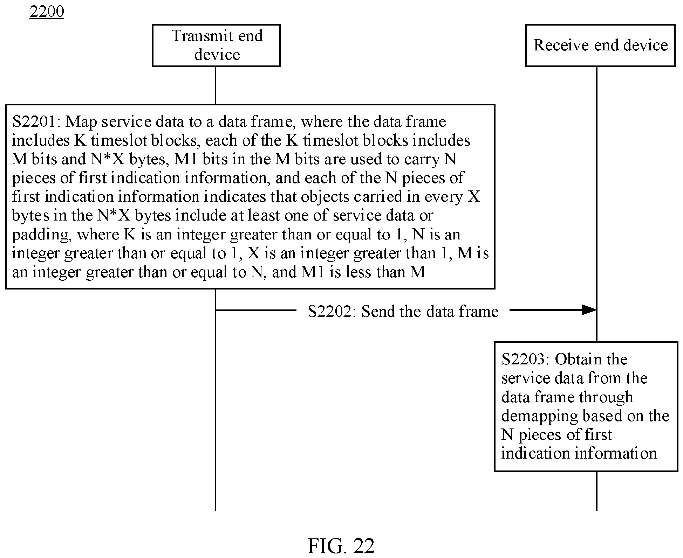

It should be noted that, for an ODUnew frame with a structure of 2 rows*3824 columns of bytes, refer to the bearer unit division method in FIG. 17 or FIG. 19 and an overhead example of the bearer unit. An overhead included in an overhead area of the ODUnew frame with a structure of 2 rows*3824 columns of bytes may be the same as an overhead included in an overhead area of the ODUnew frame with a structure of 4 rows*3824 columns of bytes, or may be less than an overhead included in an overhead area of the ODUnew frame with a structure of 4 rows*3824 columns of bytes. FIG. 22 is a schematic flowchart of a data transmission method according to this application. As shown in FIG. 22, a transmit end device may be an OTN device, or the method may be performed by a component (such as a chip or a chip system) of the OTN device. A receive end device may be an OTN device, or the method may be performed by a component (such as a chip or a chip system) of the OTN device. Specifically, the method includes the following plurality of steps.

S2201: The transmit end device maps service data to a data frame, where the data frame includes K timeslot blocks, each of the K timeslot blocks includes M bits and N*X bytes, M1 bits in the M bits are used to carry N pieces of first indication information, and each of the N pieces of first indication information indicates that objects carried in every X bytes in the N*X bytes include at least one of service data or padding. K is an integer greater than or equal to 1, N is an integer greater than or equal to 1, X is an integer greater than 1, M is an integer greater than or equal to N, and M1 is less than M.

Specifically, the transmit end device maps the service data to any OTN frame obtained through timeslot block division in FIG. 4, FIG. 6, FIG. 7, FIG. 9 to FIG. 11, FIG. 12, or FIG. 13.

S2202: The transmit end device sends the data frame to the receive end device.

S2203: The receive end device receives the data frame, and obtains the service data from the data frame through demapping based on the N pieces of first indication information.

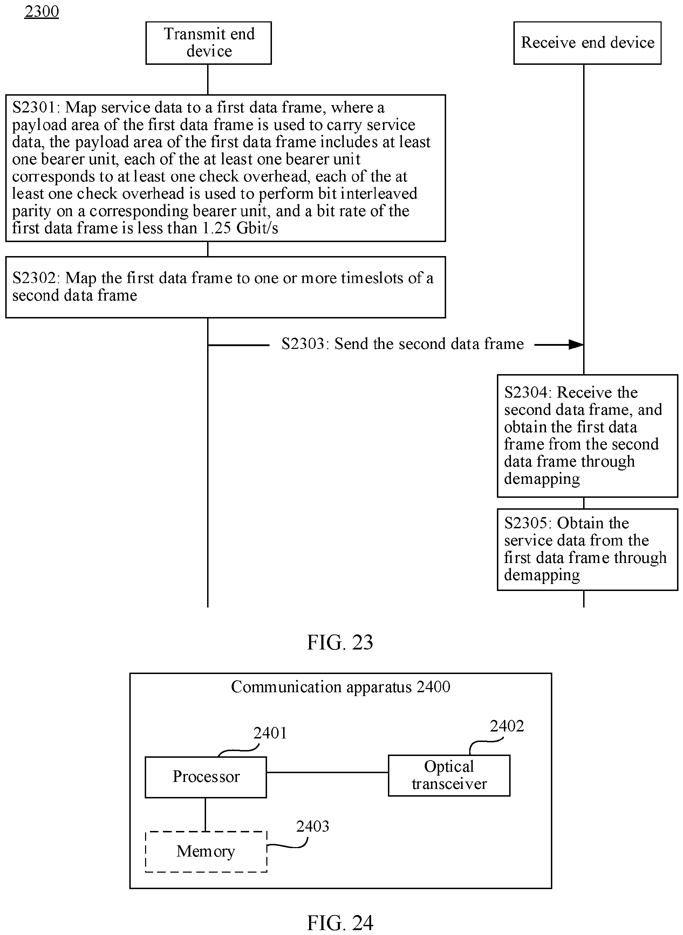

FIG. 23 is a schematic flowchart of a data transmission method according to this application. As shown in FIG. 23, a transmit end device may be an OTN device, or the method may be performed by a component (such as a chip or a chip system) of the OTN device. A receive end device may be an OTN device, or the method may be performed by a component (such as a chip or a chip system) of the OTN device. Specifically, the method includes the following plurality of steps.

S2301: The transmit end device maps service data to a first data frame, where a payload area of the first data frame is used to carry service data, the payload area of the first data frame includes at least one bearer unit, each of the at least one bearer unit corresponds to at least one check overhead, each of the at least one check overhead is used to perform bit interleaved parity on a corresponding bearer unit, and a bit rate of the first data frame is less than 1.25 Gbit/s.

Specifically, the transmit end device maps the service data to any OTN frame in FIG. 16 or FIG. 21.

S2302: The transmit end device maps the first data frame to a second data frame.

Specifically, the transmit end device maps the first data frame to any OTN frame obtained through timeslot block division in FIG. 4, FIG. 6, FIG. 7, FIG. 9 to FIG. 11, FIG. 12, or FIG. 13.

S2303: The transmit end device sends the second data frame to the receive end device.

S2304: The receive end device receives the second data frame, and obtains the first data frame from the second data frame through demapping.

S2305: The receive end device obtains the service data from the first data frame through demapping.

It should be understood that the specific examples shown in FIG. 4 to FIG. 21 in embodiments of this application are merely intended to help a person skilled in the art better understand embodiments of this application, but are not intended to limit the scope of embodiments of this application. It should be understood that sequence numbers of the foregoing processes do not mean a sequence of performing the processes. The sequence of performing the processes should be determined according to functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, an OTN device) in an existing network architecture is mainly used as an example for description. It should be understood that a specific form of the device is not limited in embodiments of this application. For example, all devices that can implement a same function in the future are applicable to embodiments of this application.

The foregoing describes in detail the structures of the two data frames provided in embodiments of this application with reference to FIG. 4 to FIG. 21 and FIG. 25-27, and describes the service data transmission method provided in embodiments of this application with reference to FIG. 22 and FIG. 23.

The following describes in detail a communication apparatus provided in embodiments of this application with reference to FIG. 24. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for descriptions.

FIG. 24 is a diagram of a possible structure of a network device. As shown in FIG. 24, a network device 2400 includes a processor 2401, an optical transceiver 2402, and a memory 2403. The memory 2403 is optional. The network device 2400 may be used in a transmit side device (for example, the network device 2400 may be the foregoing transmit end device), or may be used in a receive side device (for example, the network device 2400 may be the foregoing receive end device).

When the network device 2400 is used in the transmit side device, the processor 2401 and the optical transceiver 2402 are configured to implement the method performed by the transmit end device shown in FIG. 22 or FIG. 23. In an implementation process, the steps of the processing procedure may be performed by using an integrated logic circuit of hardware in the processor 2401 or instructions in a form of software to complete the method performed by the transmitting device in the foregoing accompanying drawings. The optical transceiver 2402 is configured to receive and process a sent OTN frame, and send the OTN frame to a peer device (also referred to as a receive end device).

When the network device 2400 is used in the receive side device, the processor 2401 and the optical transceiver 2402 are configured to implement the method performed by the receive end device shown in FIG. 22 or FIG. 23. In an implementation process, the steps of the processing procedure may be performed by using an integrated logic circuit of hardware in the processor 2401 or instructions in a form of software to complete the method performed by the receive side device in the foregoing accompanying drawings. The optical transceiver 2402 is configured to receive an OTN frame sent by a peer device (also referred to as a transmit end device), to send the OTN frame to the processor 2401 for subsequent processing.

The memory 2403 may be configured to store instructions, so that the processor 2401 can be configured to perform the steps mentioned in the foregoing figures. Alternatively, the memory 2403 may be configured to store other instructions, to configure a parameter of the processor 2401 to implement a corresponding function.

It should be noted that, in the diagram of the hardware structure of the network device shown in FIG. 2, the processor 2401 and the memory 2403 may be located in a tributary board, or may be located in a tributary-line integrated board. Alternatively, there are a plurality of processors 2401 and a plurality of memories 2403, which are respectively located in a tributary board and a line board, and the two boards cooperate to complete the foregoing method steps.

It should be noted that the apparatus in FIG. 24 may also be configured to perform the method steps involved in variations of embodiments shown in the foregoing accompanying drawings. Details are not described herein again.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, for example, a USB flash drive, a removable hard disk, a read-only memory, a random access memory, a magnetic disk, or an optical disc.

Based on the foregoing embodiments, an embodiment of this application further provides a chip. The chip includes a processor, configured to implement functions in any one or more of the foregoing embodiments, for example, obtain or process an OTN frame in the foregoing methods. Optionally, the chip further includes a memory, and the memory is configured to store necessary program instructions and data to be executed by the processor. The chip may include a chip, or include a chip and another discrete device.

Apparently, a person skilled in the art may make various modifications and variations to embodiments of this application without departing from the scope of embodiments of this application. This application is intended to cover these modifications and variations provided that they fall within the scope of protection defined by the following claims and their equivalent technologies.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
mapping service data to a data frame, wherein the data frame comprises K timeslot blocks, each of the K timeslot blocks comprises M bits and N*X bytes, M1 bits in the M bits are used to carry N pieces of first indication information, and each of the N pieces of first indication information indicates that objects carried in every X bytes in the N*X bytes comprise at least one of service data or padding, wherein K is an integer greater than or equal to 1, N is an integer greater than or equal to 1, X is an integer greater than 1, M is an integer greater than or equal to N, and M1 is less than M; and
sending the data frame.

2. The method according to claim 1, wherein the first indication information indicates that the objects carried in the X bytes further comprise second indication information, the second indication information is located in a specific byte in the X bytes, and the second indication information indicates a quantity of bytes that are used to carry the service data and that are in (X-1) bytes other than the specific byte.

3. The method according to claim 2, wherein a bit other than a bit occupied by the second indication information in the specific byte is used to correct a transmission error of the second indication information.

4. The method according to any one of claims 1 to 3, wherein every X bytes in the N*X bytes are one timeslot of the data frame.

5. The method according to any one of claims 1 to 3, wherein Y*N*X bytes in Y adjacent timeslot blocks are one timeslot of the data frame, and Y is an integer greater than or equal to 1.

6. The method according to any one of claims 1 to 3, wherein Z*N*X bytes in Z equally spaced timeslot blocks are one timeslot of the data frame, and Z is an integer greater than or equal to 1.

7. The method according to any one of claims 1 to 6, wherein M2 bits in the M bits are used to detect or correct a transmission error of the N pieces of first indication information, and M2 is less than M.

8. The method according to any one of claims 1 to 7, wherein the data frame further comprises location indication information, and the location indication information indicates a start location of a timeslot periodicity.

9. The method according to claim 8, wherein a quantity of bytes of the location indication information is 1 or 2.

10. The method according to any one of claims 1 to 9, wherein a value of X is one of 8, 16, 24, and 32.

11. The method according to any one of claims 1 to 10, wherein a value of M is a multiple of 8.

12. A data transmission method, comprising:
mapping service data to a first data frame, wherein a payload area of the first data frame is used to carry the service data, the payload area of the first data frame comprises at least one bearer unit, each of the at least one bearer unit corresponds to at least one check overhead, each of the at least one check overhead is used to perform bit interleaved parity on a corresponding bearer unit, and a bit rate of the first data frame is less than 1.25 Gbit/s;
mapping the first data frame to one or more timeslots of a second data frame; and
sending the second data frame.

13. The method according to claim 12, wherein
the at least one check overhead is located in an overhead area of the first data frame, and the at least one bearer unit is configured to carry the service data.

14. The method according to claim 12, wherein the bearer unit comprises an overhead area and a payload area, and the at least one check overhead is located in the overhead area of the bearer unit.

15. The method according to claim 14, wherein the overhead area of the bearer unit further comprises at least one of a protection switching overhead or a mapping overhead.

16. The method according to any one of claims 12 to 15, wherein the check overhead is 8-bit interleaved parity BIP-8.

17. The method according to any one of claims 12 to 16, wherein the overhead area of the first data frame comprises a path monitoring (PM) overhead, a tandem connection monitoring 1 (TCM1) overhead, a tandem connection monitoring 2 (TCM2) overhead, and a delay measurement overhead.

18. The method according to any one of claims 12 to 17, wherein a frame structure of the first data frame is 4 rows*3824 columns of bytes or 2 rows*3824 columns of bytes.

19. A data transmission method, comprising:
receiving a data frame, wherein the data frame comprises K timeslot blocks, each of the K timeslot blocks comprises M bits and N*X bytes, M1 bits in the M bits are used to carry N pieces of first indication information, and each of the N pieces of first indication information indicates that objects carried in every X bytes in the N*X bytes comprise at least one of service data or padding, wherein K is an integer greater than or equal to 1, N is an integer greater than or equal to 1, X is an integer greater than 1, M is an integer greater than or equal to N, and M1 is less than M; and
obtaining the service data from the data frame through demapping based on the N pieces of first indication information.

20. The method according to claim 19, wherein the first indication information indicates that the objects carried in the X bytes further comprise second indication information, the second indication information is located in a specific byte in the X bytes, and the second indication information indicates a quantity of bytes that are used to carry the service data and that are in (X-1) bytes other than the specific byte.

21. The method according to claim 20, wherein a bit other than a bit occupied by the second indication information in the specific byte is used to correct a transmission error of the second indication information.

22. The method according to any one of claims 19 to 21, wherein every X bytes in the N*X bytes are one timeslot of the data frame.

23. The method according to any one of claims 19 to 21, wherein Y*N*X bytes in Y adjacent timeslot blocks are one timeslot of the data frame, and Y is an integer greater than or equal to 1.

24. The method according to any one of claims 19 to 21, wherein Z*N*X bytes in Z equally spaced timeslot blocks are one timeslot of the data frame, and Z is an integer greater than or equal to 1.

25. The method according to any one of claims 19 to 24, wherein M2 bits in the M bits are used to detect or correct a transmission error of the N bits, and M2 is less than M.

26. The method according to any one of claims 19 to 25, wherein the data frame further comprises location indication information, and the location indication information indicates a start location of a timeslot periodicity.

27. The method according to claim 26, wherein a quantity of bytes of the location indication information is 1 or 2.

28. The method according to any one of claims 19 to 27, wherein a value of X is one of 8, 16, 24, and 32.

29. The method according to any one of claims 19 to 28, wherein a value of M is a multiple of 8.

30. A data transmission method, comprising:
receiving a first data frame, wherein the first data frame comprises one or more timeslots;
obtaining a second data frame from the first data frame through demapping, wherein a payload area of the second data frame is used to carry service data, the payload area of the second data frame comprises at least one bearer unit, each of the at least one bearer unit corresponds to at least one check overhead, each of the at least one check overhead is used to perform bit interleaved parity on a corresponding bearer unit, and a bit rate of the first data frame is less than 1.25 Gbit/s; and
obtaining the service data from the second data frame through demapping.

31. The method according to claim 30, wherein
the at least one check overhead is located in an overhead area of the first data frame, and the at least one bearer unit is configured to carry the service data.

32. The method according to claim 30, wherein the bearer unit comprises an overhead area and a payload area, and the at least one check overhead is located in the overhead area of the bearer unit.

33. The method according to claim 32, wherein the overhead area of the bearer unit further comprises at least one of a protection switching overhead or a mapping overhead.

34. The method according to any one of claims 30 to 33, wherein the check overhead is X-bit interleaved parity BIP-8.

35. The method according to any one of claims 30 to 34, wherein the overhead area of the first data frame comprises a path monitoring (PM) overhead, a tandem connection monitoring 1 (TCM1) overhead, a tandem connection monitoring 2 (TCM2) overhead, and a delay measurement overhead.

36. The method according to any one of claims 30 to 35, wherein a frame structure of the first data frame is 4 rows*3824 columns of bytes or 2 rows*3824 columns of bytes.

37. A data transmission method, comprising:
mapping service data to a data frame, wherein the data frame comprises K timeslot blocks, each of the K timeslot blocks comprises M bits and N*X bytes, the M bits are used to carry N pieces of first indication information, and each of the N pieces of first indication information indicates that objects carried in every X bytes in the N*X bytes comprise at least one of service data or padding, wherein K is an integer greater than or equal to 1, N is an integer greater than or equal to 1, X is an integer greater than 1, and M is an integer greater than or equal to N; and
sending the data frame.

38. The method according to claim 37, wherein N is equal to 1.

39. The method according to claim 37 or 38, wherein the first indication information indicates that the objects carried in the X bytes further comprise second indication information, the second indication information is located in a specific byte in the X bytes, and the second indication information indicates a quantity of bytes that are used to carry the service data and that are in (X-1) bytes other than the specific byte.

40. The method according to any one of claims 37 to 39, wherein every X bytes in the N*X bytes are one timeslot of the data frame.

41. The method according to any one of claims 37 to 39, wherein Y*N*X bytes in Y adjacent timeslot blocks are one timeslot of the data frame, and Y is an integer greater than or equal to 1.

42. The method according to any one of claims 37 to 39, wherein Z*N*X bytes in Z equally spaced timeslot blocks are one timeslot of the data frame, and Z is an integer greater than or equal to 1.

43. The method according to any one of claims 37 to 42, wherein a value of X is one of 8, 16, 24, and 32.

44. The method according to any one of claims 37 to 43, wherein a value of M is a multiple of 2.

45. The method according to any one of claims 37 to 43, wherein the M bits are classified into N groups, and a bit comprised in each of the N groups is used to carry one of the N pieces of first indication information.

46. The method according to any one of claims 37 to 42, wherein a value of M is 2, a value of X is 16, and a value of N is 1.

47. A data transmission apparatus, comprising a module configured to perform the method according to any one of claims 1 to 11, a module configured to perform the method according to any one of claims 12 to 18, a module configured to perform the method according to any one of claims 19 to 29, a module configured to perform the method according to any one of claims 30 to 36, or a module configured to perform the method according to any one of claims 37 to 46.

48. A chip, wherein the chip comprises a processor and a communication interface, the communication interface is configured to: receive a data frame and transmit the data frame to the processor, or send a data frame to a communication apparatus other than a communication apparatus comprising the chip, and the processor is configured to perform the method according to any one of claims 1 to 11, the method according to any one of claims 12 to 18, the method according to any one of claims 19 to 29, the method according to any one of claims 30 to 36, or the method according to any one of claims 37 to 46.
